Europäisches Patentamt

(19) European Patent Office

Office européen des brevets

(11) Numéro de publication : **0 000 319**
**B2**

(12) **NOUVEAU FASCICULE DE BREVET EUROPÉEN**

(45) Date de publication du nouveau fascicule du brevet :
05.09.84

(51) Int. Cl.³ : **G 02 B 5/14**, G 01 N 21/41, G 01 F 23/28

(21) Numéro de dépôt : **78810001.4**

(22) Date de dépôt : **01.06.78**

(54) **Dispositif pour élaborer un signal lumineux caractéristique de l'indice de réfraction d'un fluide et son utilisation.**

(30) Priorité : **01.07.77 CH 8105/77**

(43) Date de publication de la demande :
**10.01.79 Bulletin 79/01**

(45) Mention de la délivrance du brevet :
**02.09.81 Bulletin 81/35**

(45) Mention de la décision concernant l'opposition :
**05.09.84 Bulletin 84/36**

(84) Etats contractants désignés :
**BE CH DE FR GB LU NL SE**

(56) Documents cités :
**DE-A- 1 623 936**
**DE-A- 2 332 964**
**DE-B- 2 418 534**
**FR-A- 2 103 683**
**FR-A- 2 321 692**
**US-A- 3 282 149**
**US-A- 3 751 672**
**US-A- 3 995 169**
**JOURNAL OF THE OPTICAL SOCIETY OF AMERICA, vol. 36, no. 1, janvier 1946 New York (USA) E. KARRER et al.: "A photoelectric refractometer" pages 42-46**
**MACHINE DESIGN, Vol. 45, no. 16, 28 juin 1973, Ed. Penton, Cleveland (USA) "Fiber optics measure liquid level" page 42**
(73) Titulaire : **BATTELLE MEMORIAL INSTITUTE**
**7 route de Drize**
**CH-1227 Carouge/Genève (CH)**

(72) Inventeur : **Harmer, Alan Lewis**
**29, route de Pré-Marais**
**CH-1233 Bernex (CH)**

(74) Mandataire : **Dousse, Blasco**
**7, route de Drize**
**CH-1227 Carouge/Genève (CH)**

## Description

Dans de très nombreux processus, on éprouve fréquemment le besoin de détecter des changements dans les caractéristiques d'un milieu fluide, qu'il s'agisse de changements discontinus de l'état de ce fluide (par exemple présence ou absence de liquide) ou de changements continus dans les propriétés physiques ou chimiques de ce fluide (par exemple degré de concentration d'une solution, proportion d'un des constituants d'un fluide composite, variations de température d'un liquide...), ceci en vue d'applications variées telles que réalisation de mesures, opérations de contrôle ou de vérification, réalisation d'asservissement.

On a déjà proposé, dans les cas où il existe une corrélation entre les caractéristiques du milieu fluide à déterminer et son indice de réfraction, de détecter les changements dans ces caractéristiques en observant les variations de cet indice de réfraction, ceci au moyen de méthodes optiques diverses. La plupart de ces méthodes optiques sont basées sur l'exploitation des phénomènes de réflexion et de réfraction se déroulant au voisinage de l'angle limite. Elles consistent essentiellement à véhiculer de la lumière à l'intérieur d'une structure transparente conductrice de lumière immergée dans le milieu fluide à détecter, en faisant subir à cette lumière une pluralité de réflexions internes sur les parois de la structure, et à observer l'intensité de la lumière ainsi transmise par réflexions multiples, la variation brusque de cette intensité au voisinage de l'angle limite permettant de déterminer l'indice de réfraction du fluide.

Pour effectuer des mesures continues d'indice, on connaît ainsi déjà à titre d'exemple des dispositifs du genre comprenant une tige droite transparente équipée respectivement, à l'une de ses extrémités, d'un système optomécanique chargé d'injecter dans la tige un pinceau lumineux sous un angle d'incidence bien déterminé, et à son autre extrémité, d'un détecteur photoélectrique chargé de mesurer l'intensité lumineuse ainsi transmise à travers la tige par réflexions internes multiples d'incidence bien déterminée : la tige étant immergée dans le milieu fluide à mesurer, on fait alors décroître de façon continue l'angle d'incidence du pinceau lumineux injecté dans la tige tout en observant l'intensité lumineuse transmise, la chute brusque d'intensité qui se produit lorsque l'angle d'incidence des réflexions multiples dépasse l'angle limite par rapport au fluide considéré permettant ainsi de déterminer cet angle limite, et par conséquent l'indice de réfraction du fluide. Cependant, les dispositifs de ce type présentent l'inconvénient majeur d'être extrêmement compliqués, étant donné qu'ils nécessitent, entre autres, la présence d'un système d'injection de lumière relativement sophistiqué, puisqu'il doit assurer à la fois la parallélisation du pinceau lumineux incident à l'aide de moyens optiques, et la variation continue de l'angle d'incidence de ce pinceau à l'aide de moyens mécaniques.

Pour effectuer de simples mesures de niveau, on connaît déjà par ailleurs un certain nombre d'autres dispositifs, du type comprenant un prisme (ou un cône) accolé contre l'extrémité inférieure d'une tige transparente introduite à l'intérieur du récipient contenant le liquide dont on veut déterminer le niveau, dans lesquels l'indication de niveau est obtenue par injection de lumière dans l'extrémité supérieure de la tige et par observation visuelle de la lumière susceptible d'être renvoyée par le prisme jusqu'à cette extrémité supérieure (cette extrémité supérieure apparaissant claire en cas d'absence de liquide au niveau du prisme, et plus sombre dans le cas contraire). Cependant, les dispositifs de ce genre ne sont pas sans présenter un certain nombre d'inconvénients : le faible nombre de réflexions ainsi réalisées (réflexion simple ou double) ne permet tout d'abord d'obtenir qu'un contraste lumineux peu élevé, cependant que le facteur de transmission de la lumière reste relativement faible ; la construction de tels dispositifs s'avère par ailleurs relativement compliquée. Mais avant tout, ces dispositifs présentent l'inconvénient majeur de ne pouvoir fonctionner que dans deux états bien distincts l'un de l'autre du fait du caractère fixe de l'incidence de la lumière, de sorte qu'ils ne sont guère adaptés pour effectuer des mesures continues d'indice et qu'ils restent presque exclusivement limités à des détections de changement d'état telles qu'indication de niveau.

En vue de remédier aux inconvénients susmentionnés, on a en outre proposé d'utiliser des dispositifs constitués par de simples tiges transparentes comportant une section intermédiaire incurvée en forme de U destinée à être immergée dans le liquide à tester, dans lesquels l'indice de réfraction de ce fluide est déterminé par injection de lumière par l'une des extrémités de la tige et par observation de la lumière transmise à son autre extrémité. Dans de tels dispositifs, la section incurvée de la tige a pour effet de provoquer le passage par réfraction dans le liquide d'une quantité de lumière qui s'avère être sensiblement fonction de l'indice de réfraction de ce liquide, de sorte que la quantité de lumière transmise à l'autre extrémité de la tige constitue une grandeur caractéristique de cet indice de réfraction (un dispositif de ce type se trouve à titre d'exemple décrit dans l'article « A photoelectric Refractometer » par E. Karrer et R. Orr., Journal of the Optical Society of America, Volume 36 n° 1, pages 42 à 46, Janvier 1946). De tels dispositifs apparaissent *a priori* particulièrement avantageux, étant donné leur grande simplicité et leur faible coût, ainsi que le fait qu'ils semblent pouvoir en principe être utilisés aussi bien pour détecter des changements discontinus que des changements continus des caractéristiques du liquide à tester. Cependant, ces dispositifs présentent l'inconvénient majeur d'être doués d'une très faible sensibilité, de sorte que non seulement leur utilisation comme réfractomètres s'avère des plus limitées (en raison de leur inaptitude à pouvoir détecter de faibles variations de l'indice de réfraction de liquide à tester), mais que même leur utilisation comme simples indicateurs de niveau s'avère loin d'être satisfaisante (en raison de faibles contrastes susceptibles d'être enregistrés).

On a proposé plus récemment d'apporter différentes variantes à ces dispositifs constitués par des tiges transparentes incurvées. Mais aucune des variantes proposées jusqu'à l'heure actuelle ne s'est traduite par une amélioration notable de leur sensibilité. On a ainsi à titre d'exemple proposé de remplacer la tige incurvée en forme de U par une tige présentant une courbure d'au moins 360° (brevet US 3.282.149) ; mais ce remplacement avait pour simple but de permettre une linéarisation de la mesure, sans changement notable quant à la sensibilité. On a aussi à titre d'exemple proposé de remplacer la tige transparente par une fibre optique incurvée (brevet FR 2.130.037), dans le but essentiel de permettre une miniaturisation de l'appareillage, ce simple remplacement n'ayant là aussi pratiquement aucun effet sur la sensibilité.

La présente invention a précisément pour but de pallier les inconvénients susmentionnés, en proposant un dispositif simple doué d'une excellente sensibilité, qui puisse détecter aussi bien des changements d'état discontinus d'un fluide que des variations continues de diverses caractéristiques de ce fluide liées à son indice de réfraction.

A cet effet, la présente invention a pour objet un dispositif pour élaborer un signal lumineux caractéristique de l'indice de réfraction d'un fluide, comportant un seul corps longiligne conducteur de la lumière se composant d'une section d'entrée et d'une section de sortie raccordées l'une à l'autre par une section intermédiaire incurvée, ladite section d'entrée étant destinée à recevoir de la lumière par son extrémité libre et au moins ladite section incurvée étant destinée à être immergée dans ledit fluide, la courbure de ladite section incurvée étant par ailleurs choisie suffisamment prononcée pour donner lieu à un passage de lumière non négligeable par réfraction dans ledit fluide, fonction de l'indice de réfraction dudit fluide, l'indice de réfraction du corps longiligne étant supérieur à celui du fluide, caractérisé par le fait que ladite section intermédiaire incurvée présente un profil comprenant au moins deux courbures alternées successives suffisamment prononcées, alternativement concaves et convexes.

La présente invention a également pour objet l'utilisation d'un tel dispositif pour détecter la présence ou l'absence dudit fluide, ou pour mesurer l'indice de réfraction dudit fluide.

Dans la présente description, les expressions « corps longiligne conducteur de la lumière » ou « guide de lumière », entendent désigner tout corps longiligne capable de véhiculer de la lumière par réflexions internes multiples. Ces expressions entendent ainsi notamment englober aussi bien des guides de lumière constitués par une simple tige faite en un matériau transparent, que des guides constitués par une fibre optique (cette tige transparente ou cette fibre optique étant par ailleurs conformées de façon à comporter une section intermédiaire incurvée présentant le profil désiré).

On voit ainsi que la caractéristique essentielle du dispositif selon l'invention réside dans l'utilisation d'un guide de lumière comprenant une section intermédiaire incurvée se composant d'une pluralité de courbures alternées (nombre de courbures au moins égal à 2). Une telle structure à courbures alternées présente l'avantage majeur de conférer au dispositif de l'invention une sensibilité particulièrement importante (le degré de sensibilité d'une telle structure pouvant être déterminé par l'importance de la variation de l'intensité lumineuse transmise pour une variation donnée de l'indice de réfraction du fluide à mesurer), et en tout état de cause notablement supérieure à celle susceptible d'être obtenue avec une structure à courbure unique (qu'il s'agisse d'une courbure en forme de U ou d'une courbure d'au moins 360°).

La section intermédiaire à courbures alternées du guide de lumière constitutif du dispositif selon la présente invention peut revêtir des formes multiples, pourvu que les différentes courbures de cette section intermédiaire restent arrangées les unes à la suite des autres de façon que l'une quelconque de ces courbures soit toujours tournée en sens inverse des courbures qui lui sont adjacentes. Comme structures possibles pour cette section intermédiaire, on peut ainsi envisager d'utiliser des structures à double courbure, dans lesquelles la courbure aval se trouve tournée en sens inverse de la courbure amont, ou bien des structures à triple courbure, dans lesquelles la courbure médiane se trouve tournée en sens inverse des courbures amont et aval, ou encore des structures présentant un nombre de courbures plus élevé. Dans toutes les structures susmentionnées, les différentes courbures peuvent par ailleurs être raccordées les unes aux autres par des portions intermédiaires droites, ou au contraire être directement jointives (c'est-à-dire raccordées directement les unes aux autres sans être séparées par des portions droites). Dans le cas des courbures raccordées entre elles par l'intermédiaire de portions droites, ces portions droites seront par ailleurs choisies de manière avantageuse de façon que leur longueur reste relativement faible par rapport à celle des courbures auxquelles elles sont raccordées.

Dans les structures à courbures alternées telles que sus-définies, chacune des courbures peut par ailleurs revêtir une forme quelconque pourvu qu'elle soit suffisamment prononcée. Comme formes de courbure possibles, on peut ainsi envisager de concevoir des courbures présentant un rayon de courbure constant revêtant la forme d'un arc de cercle, l'extension de cet arc de cercle pouvant par ailleurs être variable (demi-cercle, quart de cercle, tour complet, etc...), ou au contraire des courbures présentant un rayon de courbure variable, ce rayon pouvant alors varier de manière croissante ou décroissante. De manière préférentielle, le rayon de courbure R des différentes courbures alternées sera choisi, pour un guide de lumière cylindrique donné de rayon r, de façon que le rapport R/r soit compris entre environ 3 et 5.

Dans le cas d'un guide de lumière constitué par une simple tige transparente, cette tige pourra être faite en tout matériau transparent approprié. Ce matériau doit cependant être choisi dans le cas où le dispositif est utilisé pour déterminer des variations continues d'indice, de façon à avoir un indice de réfraction supérieur à celui du liquide à détecter, alors qu'il pourrait très bien avoir, dans le cas où le dispositif est utilisé comme indicateur de niveau, un indice de réfraction quelconque, supérieur ou inférieur à celui du liquide à détecter. Comme matériaux transparents possibles, on peut ainsi envisager d'utiliser des matières plastiques telles que le polystyrène (n = 1,65), le polyméthylmétacrylate (n = 1,49), etc... ou des verres tels que silice (1,458), verres au borosilicate (n typique = 1,5) verres au plomb (n typique = 1,7), verre au fluor (n typique = 1,35), etc. La grandeur de la section droite de la tige conductrice de lumière à courbures alternées selon l'invention a peu d'importance par elle-même, puisque c'est le rapport R/r du rayon de courbure R des différentes courbures et du rayon r de la tige qui est en fait déterminant pour l'obtention de l'effet désiré. Il s'ensuit qu'on peut en pratique utiliser aussi bien des tiges à section droite très faible que des tiges à section droite relativement élevée ; il suffit simplement d'adapter dans chaque cas l'importance de la courbure à la valeur de la section droite que l'on a choisie pour la tige. Il n'est par ailleurs pas obligatoire que cette section droite soit circulaire, et on peut très bien envisager d'utiliser des tiges à section droite carrée, hexagonale, elliptique (le rayon de courbure R devant alors, dans un tel cas, être suffisamment faible par rapport à celle des dimensions de ladite section droite qui se trouve contenue dans le plan de courbure).

Dans le cas d'un guide de lumière constitué par une fibre optique, on pourra en principe envisager d'utiliser tout type de fibre approprié (ces fibres pourront par ailleurs être faites en des matériaux aussi bien à base de verres qu'à base de matières plastiques). De manière particulièrement avantageuse, on choisira toutefois d'utiliser plus spécialement des fibres dites à saut d'indice. Dans le cas d'utilisation de fibres optiques, la présence d'une gaine autour du cœur conducteur de la lumière présente l'avantage additionnel d'empêcher, dans les parties non incurvées de la fibre, tout risque d'influence parasite. En ce qui concerne les portions incurvées de ces fibres, on pourra par ailleurs envisager soit de les dénuder complètement de leur gaine, de façon à permettre un contact direct du cœur central avec le milieu fluide à tester, soit au contraire de les laisser telles quelles, complètement protégées par leur gaine. Les résultats permettent en effet de montrer que la présence d'une gaine autour des portions incurvées de la fibre ne modifie pas de manière fondamentale les phénomènes de pertes de lumière par réfraction au passage de ces portions incurvées ; la présence de cette gaine ne se traduit en effet que par une légère diminution du contraste, l'intensité de la lumière transmise restant toujours caractéristique de l'indice de réfraction du milieu fluide environnant à tester. Dans ce dernier cas toutefois (portions incurvées non dénudées), on choisira de manière préférentielle d'utiliser des fibres possédant une gaine de relativement faible épaisseur.

Dans la présente description, le terme « angle d'incidence d'un rayon lumineux sur une surface » sera par ailleurs utilisé selon sa définition habituelle à savoir « angle que fait ce rayon lumineux par rapport à la normale à cette surface d'incidence ». Selon cette définition, une augmentation de l'obliquité du rayon lumineux par rapport à la surface d'incidence équivaut donc à une diminution de son angle d'incidence.

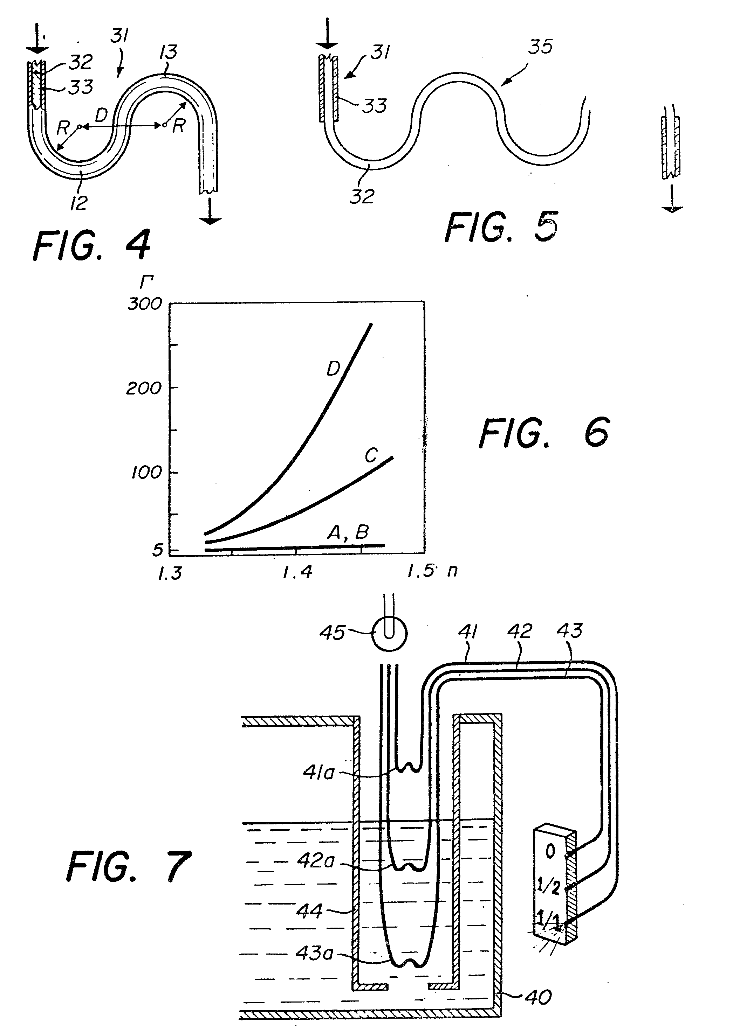

On va enfin donner ci-après la définition de deux grandeurs qui seront fréquemment utilisées dans la suite de l'exposé pour mieux préciser les effets procurés par la section incurvée du dispositif selon l'invention, à savoir le « coefficient de transmission dans l'air » et le « coefficient de contraste » du dispositif. Soient, à cet égard, respectivement $I_o$ l'intensité lumineuse injectée à l'entrée du guide de lumière incurvé, $I_{ta}$ l'intensité lumineuse transmise par ce guide lorsque le milieu environnant la section incurvée est de l'air, et $I_{ti}$ l'intensité lumineuse transmise par ce guide lorsque le milieu environnant la section incurvée est un liquide d'indice de réfraction n (ce liquide pouvant par ailleurs être le liquide à tester ou un liquide de référence). On appelera respectivement « coefficient de transmission dans l'air » le rapport $I_{ta}/I_o$ de l'intensité lumineuse $I_{ta}$ transmise par le guide en présence d'air : l'intensité lumineuse $I_o$ injectée dans le guide (ce coefficient permettant en quelque sorte se définir les pertes de lumière par réfraction en présence d'air), et « contraste » ou « coefficient de contraste » $\Gamma$ le rapport $I_{ta}/I_{ti}$ de l'intensité lumineuse $I_{ta}$ transmise en présence d'air à l'intensité lumineuse $I_{ti}$ transmise en présence de liquide. Selon cette dernière définition, la « sensibilité » du dispositif peut donc aussi se définir comme étant représentée par l'importance de la variation de contraste obtenue pour une variation d'indice prédéterminée (sensibilité correspondant à la pente des courbes du diagramme de la fig. 6). Le dessin annexé illustre, schématiquement et à titre d'exemple, plusieurs formes d'exécution ainsi que des variantes du dispositif objet de la présente invention.

Les figures 1a et 1b sont des vues en coupe longitudinale schématique, illustrant deux dispositifs connus de l'état de la technique.

La figure 2 est une vue en coupe longitudinale schématique, illustrant une première forme d'exécution du dispositif selon l'invention.

La figure 3 est une vue en coupe longitudinale partielle, illustrant une variante de cette première forme d'exécution.

La figure 4 est une vue analogue à celle de la figure 3, illustrant une seconde forme d'exécution.

La figure 5 est une vue analogue à celle de la figure 4, illustrant une variante de cette seconde forme d'exécution.

La figure 6 est un diagramme illustrant les résultats obtenables avec le dispositif selon l'invention, comparés avec ceux obtenables avec les dispositifs connus de l'état de la technique.

La figure 7 est une vue en coupe longitudinale d'une installation pour la détection d'une pluralité de niveaux, utilisant plusieurs dispositifs selon l'invention.

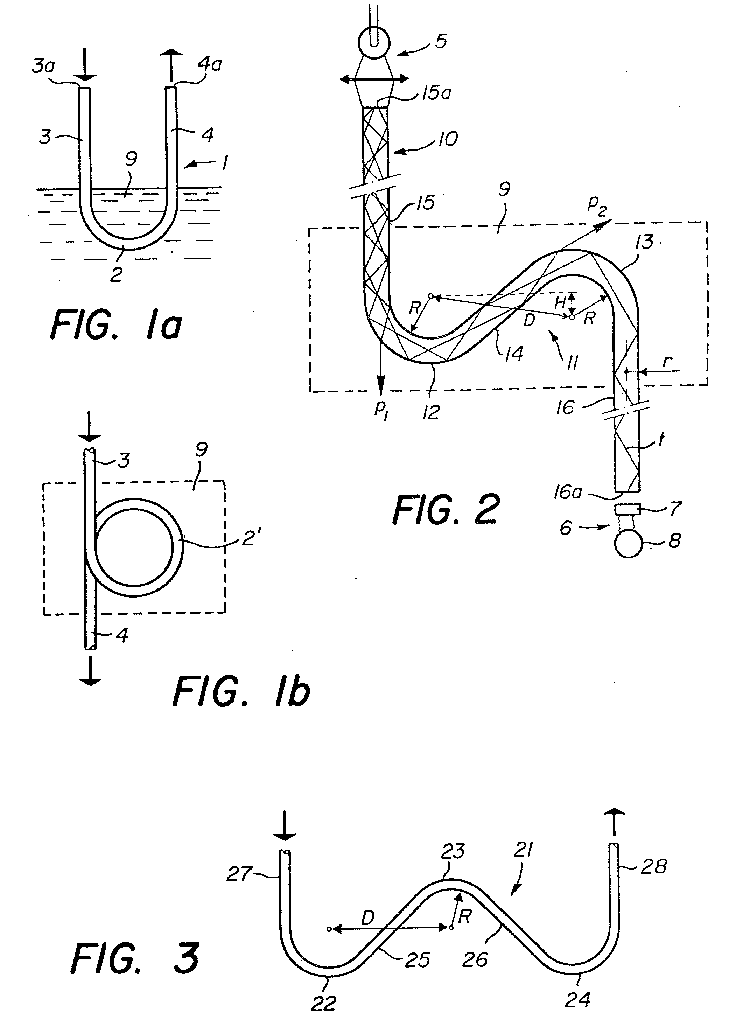

Les figures 1a et 1b illustrent à titre d'exemple deux dispositifs connus de l'état de la technique. Ces deux premières illustrations ont pour but de faire clairement ressortir les différences essentielles qui existent entre ces dispositifs connus et les différentes formes d'exécution du dispositif selon l'invention qui vont être décrites par la suite. Le dispositif représenté à la figure 1a comprend une tige transparente 1 en forme de U se composant d'une section incurvée 2 de forme semi-circulaire se prolongeant à chacune de ses extrémités par des sections droites 3 et 4. L'extrémité libre 3a de l'une des sections droites 3 est utilisée pour réaliser l'injection de lumière dans la tige 1, cependant que l'extrémité libre 4a de l'autre section droite 4 est utilisée pour la détection de la lumière transmise à travers la tige 1 (injection et sortie de lumière schématisées par des flèches au dessin). La section incurvée 2 étant immergée dans un liquide 9 à tester, on constate que la quantité de lumière émergeant à l'extrémité 4a est fonction de l'indice de réfraction du liquide 9. Le dispositif représenté à la figure 1b est analogue à celui de la figure 1a, mis à part le fait que la section incurvée 2 de forme semi-circulaire est ici remplacée par une section 2' incurvée à 360°.

La figure 2 illustre une première forme d'exécution du dispositif selon l'invention, suivant laquelle on utilise un guide de lumière constitué par une simple tige transparente pourvue de deux courbures alternées. Le dispositif représenté sur cette figure comprend une tige 10 faite en un matériau transparent, qui se compose respectivement d'une section intermédiaire incurvée 11 en forme de S, et de deux sections droites 15 et 16 s'étendant sensiblement verticalement à partir de chacune des extrémités de cette section incurvée 11. Les sections droites 15 et 16 sont destinées à servir respectivement de section d'entrée et de section de sortie pour la tige 10. La section incurvée 11 en forme de S se compose respectivement quant à elle de deux portions incurvées 12 et 13 en forme d'arc de cercle raccordées l'une à l'autre par une portion intermédiaire droite 14, ces deux portions incurvées 12 et 13 étant par ailleurs agencées de façon à être sensiblement symétriques l'une par rapport à l'autre, tout en étant tournées en sens inverse l'une de l'autre. La tige transparente 10 présente une section droite circulaire de rayon r, cependant que les portions incurvées 12 et 13 présentent un rayon de courbure constant R.

A proximité de la face d'extrémité plane 15a de la section d'entrée 15 se trouve disposée une source de rayonnement lumineux 5 chargée d'injecter de la lumière dans la tige transparente 10, cependant qu'à proximité de la face d'extrémité 16a de la section de sortie 16 se trouve disposé un système de détection 6 chargé de déterminer l'intensité lumineuse transmise par la tige 10. A titre d'exemple, ce système de détection 6 peut être constitué par un détecteur photoélectrique 7 relié électriquement à un dispositif de mesure et/ou d'affichage 8. La section incurvée de ce dispositif est destinée à être immergée dans un liquide 9 d'indice de réfraction n, dont on désire déterminer l'une des caractéristiques liées à cet indice de réfraction. Le matériau transparent constitutif de la tige 10 est enfin choisi de façon à avoir un indice de réfraction $n_l$ supérieur à l'indice de réfraction n du liquide à tester.

La géométrie de la structure à double courbure qui vient d'être décrite est essentiellement contrôlée par trois paramètres : le rayon de courbure R de chacune des portions incurvées 12 et 13 (ou encore le quotient R/r normalisé au rayon r de la tige), la distance D séparant les centres de courbure de chacune de ces portions, incurvées, et le déplacement horizontal H. De manière avantageuse, on a intérêt à choisir un rayon de courbure R relativement faible par rapport à r si on désire accroître de manière optimale le contraste et la sensibilité du dispositif. De manière préférentielle, ce rayon de courbure R sera choisi de façon que le quotient R/r soit compris entre environ 3 et 5. Pour les mêmes raisons également, on a par ailleurs intérêt à maintenir la distance D au voisinage du minimum permis par le rayon de courbure (c'est-à-dire environ (2 R = 2 r)). Toujours pour les mêmes raisons de contraste et sensibilité, on a enfin intérêt à choisir la distance H sensiblement nulle ou faiblement positive (cas représenté à la figure 2).

Le fonctionnement du dispositif qui vient d'être décrit peut s'expliquer de la manière suivante :

La section incurvée 11 de ce dispositif étant immergée dans le liquide 9 à tester, on injecte de la lumière dans la tige transparente 10 au moyen de la source 5. Le faisceau de lumière délivré par cette source 5 peut a priori avoir une ouverture quelconque, étant donné que la quantité de lumière effectivement piégée par la tige transparente 10 dépend seulement, ainsi qu'il est bien connu, de l'« ouverture numérique » de cette tige et non pas de l'ouverture du faisceau incident. On sait en effet que seuls sont piégés à l'intérieur de la tige les rayons incidents qui frappent sa paroi sous un angle d'incidence supérieur à son angle limite par rapport au milieu environnant (air), les autres rayons d'angle d'incidence inférieur se trouvant réfractés en dehors de la section droite 15. La lumière effectivement piégée à l'intérieur de la tige transparente 10 se trouve alors transmise par réflexions internes multiples à travers la section droite 15, jusqu'à son arrivée dans la section incurvée 11 immergée dans le liquide 9 à tester.

La première courbure 12 de cette section incurvée 11 a pour effet de modifier l'incidence des rayons qui viennent frapper ses parois, en provoquant en particulier une réduction de l'angle d'incidence de ceux des rayons qui viennent frapper sa surface extérieure (cette réduction d'angle d'incidence étant par ailleurs fonction de l'importance de la courbure), de sorte que ceux des rayons incidents dont l'angle devient inférieur à l'angle limite par rapport au liquide environnant 9 sont alors contraints de passer par réfraction dans ce liquide (comportement illustré par le rayon $p_1$ au dessin). Pour une courbure donnée, cette réduction d'incidence n'est au demeurant pas identique pour tous les rayons qui arrivent avec la même incidence dans cette portion incurvée 12, puisqu'elle dépend au contraire de la profondeur à laquelle ces rayons ont pu pénétrer dans cette portion incurvée avant de venir en frapper sa surface extérieure, de sorte qu'une partie seulement des rayons qui arrivent sous la même incidence est susceptible de passer hors de la tige 10 par réfraction dans le liquide environnant. Cette partie plus ou moins grande de rayons qui sont susceptibles de sortir par réfraction dans le liquide environnant est évidemment fonction de l'indice de réfraction de ce liquide puisque l'angle limite de réflexion totale dépend de cet indice. La partie restante des rayons qui ne s'est pas échappée de la tige lors de cette première incidence sur la portion incurvée est alors réfléchie totalement à l'intérieur de la tige et transmise par réflexions successives jusqu'à la seconde courbure 13 (il est facile de montrer que c'est la première incidence sur la portion incurvée qui détermine le passage éventuel des rayons dans le milieu environnant, un rayon réfléchi totalement après cette première incidence se réfléchissant en effet ensuite ultérieurement dans la première courbure suivant des angles d'incidence constants (égaux à celui de la première incidence) qui ne l'autorisent plus à sortir de la tige jusqu'à la prochaine courbure).

Les rayons totalement réfléchis par la première courbure 12, qui avaient déjà tendance à progresser le long de la surface extérieure de cette première courbure, sont alors contraints à leur arrivée dans la seconde courbure 13, du fait de l'inversion de cette dernière, de venir frapper ses parois sous une incidence extrêmement faible pour la plus grande partie d'entre eux, de sorte que la majeure partie de ces rayons se voit alors contrainte de passer par réfraction dans le milieu environnant (comportement illustré par le rayon p2 au dessin). Cette majeure partie des rayons contrainte de passer par réfraction dans le liquide environnant est évidemment aussi fonction de l'indice de réfraction de ce liquide, étant donné que l'angle limite de réflexion totale dépend là encore de cet indice. La partie restante des rayons qui ne s'est pas échappée de la tige lors de cette première incidence sur la seconde courbure 13 est ensuite réfléchie totalement à l'intérieur de la tige (les incidences ultérieures ayant en effet lieu suivant des angles égaux à celui de la première incidence), et donc transmise par réflexions internes successives jusqu'à son autre extrémité 16a (comportement illustré par le rayon t au dessin).

Il s'ensuit que l'intensité lumineuse émergeant ainsi à l'autre extrémité 16a de la tige, qui est sensiblement égale à l'intensité lumineuse injectée dans la tige diminuée des pertes par réfraction subies au passage des portions incurvées 12 et 13 (aux pertes près par absorption dans la tige), est donc également fonction de l'indice de réfraction du milieu environnant la portion incurvée. Cette intensité lumineuse transmise constitue donc bien un signal lumineux caractéristique de l'indice de réfraction du milieu environnant la section incurvée de la tige.

Le signal lumineux ainsi élaboré par le dispositif qui vient d'être décrit diffère cependant d'une manière fondamentale de celui élaboré par les dispositifs connus des figures 1a et 1b (bien qu'il soit dans les deux cas caractéristique de l'indice de réfraction du fluide à tester) par le fait qu'il présente ici une sensibilité beaucoup plus importante, ce résultat tout à fait inattendu étant dû à la présence de la seconde courbure 13 disposée en sens inverse de la première courbure 12 qui joue en quelque sorte un rôle d'amplification des effets déjà observables lors de la traversée de cette première courbure. Cette seconde courbure 13 disposée en sens inverse permet en effet de décupler les effets obtenus lors du passage de la première courbure 12, en raison du fait que les rayons pénétrant dans cette seconde courbure ont déjà vu leur trajet suffisamment modifié lors de leur passage dans la première courbure pour devoir être contraints de venir frapper la seconde courbure sous une forte obliquité, laquelle forte obliquité oblige ainsi la majeure partie de ces rayons à sortir par réfraction de la tige au niveau de cette seconde courbure (forte obliquité au demeurant impossible à réaliser lors de la pénétration dans la première courbure, du fait de l'« ouverture numérique » limitée à la section d'entrée 15 de la tige transparente). L'obtention d'une sensibilité particulièrement importante dans le dispositif selon l'invention (et donc l'obtention d'un contraste élevé) sera clairement mise en évidence dans les exemples qui seront décrits dans la suite de l'exposé.

On a dit plus haut que c'était la première incidence à l'entrée de la première courbure qui déterminait les pertes par réfraction dans cette courbure, les rayons totalement réfléchis après cette première incidence ayant ensuite tendance à progresser le long de la surface extérieure de la courbure sous des angles d'incidence constants et peu élevés. On voit donc qu'il est tout à fait inutile d'accroître la longueur de cette courbure en lui faisant subir plusieurs tours dans le même sens (cas du dispositif connu de la figure 1b) si l'on désire améliorer la sensibilité étant donné qu'une telle mesure aurait seulement pour résultat d'entraîner une réduction de transmission (augmentation des pertes par absorption dans le matériau transparent) sans accroître en aucune manière le contraste et la sensibilité. La seule mesure qui s'avère efficace pour accroître de manière notable ce contraste et cette sensibilité est précisément celle mise en œuvre dans la présente invention, à savoir le fait de faire suivre cette première courbure d'au moins une seconde courbure disposée dans le sens inverse à la première.

L'explication qualitative qui vient d'être donnée ci-dessus en ce qui concerne l'effet des courbures n'est en fait qu'approximative. Une telle explication est en effet valable essentiellement pour les rayons méridionaux (c'est-à-dire rayons intersectant l'axe du guide de lumière), mais non pour les rayons obliques (c'est-à-dire rayons n'intersectant pas cet axe), lesquels rayons obliques (« skew rays ») véhiculent pourtant ainsi qu'il est connu, la majeure partie de l'énergie lumineuse injectée dans la tige transparente. Cependant, il est pratiquement impossible d'effectuer une analyse théorique globale du phénomène, compte tenu du comportement hautement complexe de ces rayons obliques. On pourrait tenter d'effectuer une approche théorique plus complète prenant en compte le comportement de ces rayons obliques, en utilisant un traitement mathématique basé sur l'analyse des modes de propagation à l'intérieur de la tige transparente. Cependant un tel traitement, s'il est déjà complexe à établir dans le cas d'une courbure unique soumise à la pénétration d'un rayonnement réparti uniformément, s'avère pratiquement impossible à réaliser dans le cas d'une seconde courbure alternée, du fait de la non-uniformité de la répartition spatiale de la lumière à son arrivée dans la seconde courbure (non-uniformité due à l'effet de la première courbure qui entraîne une concentration de l'énergie lumineuse au voisinage de la surface extérieure de cette courbure).

L'explication qualitative sus-énoncée, bien qu'approximative est néanmoins amplement corroborée dans la pratique par les différents résultats expérimentaux obtenus grâce à la mesure de l'intensité lumineuse transmise (lesquels prennent en compte aussi bien les rayons obliques que les rayons méridionaux), ainsi que le montreront clairement les exemples décrits par la suite.

La figure 3 illustre une première variante du dispositif selon l'invention, selon laquelle on utilise une structure constituée par une tige transparente 21 présentant trois courbures alternées. La tige 21 en forme de W représentée sur cette figure se compose, respectivement, de trois portions incurvées 22, 23 et 24 en forme d'arc de cercle raccordées les unes avec les autres par deux portions intermédiaires 25 et 26 (la portion incurvée médiane 23 étant disposée en sens inverse des courbures externes 22 et 24), les extrémités libres des courbures externes 22 et 24 se prolongeant par ailleurs par les portions droites 27 et 28.

La figure 4 illustre une seconde forme d'exécution du dispositif selon l'invention, basée sur l'utilisation d'une fibre optique à double courbure. Cette structure est analogue à celle de la figure 2, mis à part que la tige transparente 10 faite en un matériau unique est ici remplacée par une fibre optique 31, se composant d'un cœur central 32 entouré par une gaine de faible épaisseur 33, cette fibre optique 31 restant par ailleurs non dénudée sur toute sa longueur. La géométrie de cette structure diffère par ailleurs de celle représentée à la figure 2 par le fait que les courbures 12 et 13 sont ici directement jointives (pas de portion intermédiaire entre les courbures) et de formes semicirculaires, le déplacement horizontal H étant par ailleurs choisi égal à zéro.

La figure 5 illustre une variante du dispositif de la figure 4, selon laquelle la fibre optique 31 est pourvue d'une section incurvée 35 comportant quatre courbures alternées (au lieu de deux comme à la figure 4), cette section incurvée 35 étant par ailleurs complètement dénudée de sa gaine 33 (cœur 32 mis à nu).

Exemple 1

Cet exemple a pour but de permettre d'établir la comparaison entre les résultats observables avec le dispositif selon l'invention et les dispositifs connus de l'état de la technique, de façon à montrer les différences fondamentales existant entre ces dispositifs.

On utilise comme matériau de départ des fibres optiques plastiques PS/PMMA de 1,15 mm de diamètre externe, se composant respectivement d'un cœur central de 1,03 mm de diamètre fait en polystyrène (indice égal à 1,59) et d'une gaine de 60 microns d'épaisseur faite en polyméthylmétacrylate (indice égal à 1,49). A l'aide de ces fibres, on réalise les différentes structures suivantes (toutes ces structures conservant leur gaine dans les portions incurvées) :

a) une première structure comportant une simple courbure à 180° (géométrie analogue à celle de la figure 1a), qui présente un rayon de courbure R égal à 1,75 mm ;

b) une deuxième structure comportant une simple courbure à 360° (géométrie analogue à celle de la figure 1b), dont le rayon de courbure est aussi égal à 1,75 mm ;

c) une troisième structure comportant une double courbure alternée (géométrie analogue à celle de la figure 2), gouvernée par les paramètres suivants : R choisi égal à 1,75 mm, D choisi égal à 4,65 mm (2 R + 2 r), et H choisi égal à + 0,97 mm ;

d) une quatrième structure comportant une quadruple courbure alternée (géométrie analogue à celle de la figure 5), gouvernée par les paramètres suivants : R choisi égal à 1,75 mm, D choisi égal à 4,65 mm (2 R + 2 r), et H choisi sensiblement nul.

Les structures susmentionnées peuvent à titre d'exemple être réalisées par chauffage de la fibre à une température comprise entre environ 100 et 200 °C, et par conformation de la fibre ainsi chauffée autour de matrices cylindriques de dimensions appropriées (matrices présentant notamment un rayon externe égal à 1,75 mm.

On effectue ensuite des mesures de transmission de lumière à travers chacune de ces structures au moyen d'une source constituée par une lampe quartz-iode de 150 W de puissance et d'un détecteur constitué par une photodiode au silicium présentant une réponse spectrale comprise entre 400 et 950 nm avec un pic à 700 nm. On effectue toute une série de mesures, en immergeant ces différentes structures dans une succession de liquides d'indices connus. Les résultats ainsi obtenus sont reportés sur le diagramme de la figure 6, qui illustre la variation du coefficient de contraste $\Gamma$ en fonction de l'indice de réfraction n du liquide testé pour les différentes structures susmentionnées, les courbes A et B correspondant respectivement à la première et à la deuxième structures connues de l'état de la technique, et les courbes C et D à la troisième et à la quatrième structures selon l'invention (les courbes A et B étant pratiquement confondues à l'échelle du dessin). Ce diagramme illustre à l'évidence non seulement la nette supériorité des performances (tant en ce qui concerne le contraste que la sensibilité) des structures selon l'invention par rapport à celles connues de l'état de la technique, mais aussi et surtout l'effet synergétique tout à fait inattendu procuré par les courbures alternées permettent en effet l'obtention de performances décuplées par rapport aux courbures uniques de l'état de la technique, et non pas des performances simplement doublées ou quadruplées comme on pourrait normalement s'y attendre.

Exemple 2

Cet exemple a pour but d'illustrer la façon dont varie l'intensité lumineuse transmise par le dispositif selon l'invention en fonction de l'importance des courbures imprimées à la tige conductrice de lumière de ce dispositif.

On utilise comme matériau de départ des fibres optiques (vendues dans le commerce sous le nom de CROFON par la Société Dupont de Nemours) de 1 mm de diamètre externe, se composant respectivement d'un cœur central fait en une première matière plastique d'indice égal à 1,49 (polyméthylmétacrylate), et d'une gaine faite en une seconde matière plastique d'indice égal à 1,39 (l'épaisseur de la gaine étant inférieure à 50 microns).

On réalise trois structures de fibre optique à double courbures identiques à celles illustrées à la figure 4 (à savoir structure présentant une distance D égale à (2 R + 2 r) et une distance H nulle), ces courbures se différenciant les unes des autres simplement par le fait que le rayon de courbure R est choisi différent dans chacun des cas, à savoir respectivement 2 mm, 1,75 mm et 1,5 mm (D étant alors respectivement égal à 5 mm, 4,5 mm et 4 mm). On immerge successivement chacune de ces structures, respectivement, dans l'air et dans un liquide de référence d'indice égal à 1,39 (essence), et on mesure à chaque fois la lumière transmise à travers ces structures de la même façon que précédemment. Les mesures obtenues permettent de déterminer, pour chacune de ces structures, un coefficient de contraste respectivement égal à environ 8, 18 et 75, ainsi qu'un coefficient de transmission dans l'air respectivement égal à 55 %, 50 % et 43 %.

On voit ainsi clairement que le contraste croît fortement en fonction de l'importance des courbures cette forte croissance quant au contraste s'accompagnant par ailleurs d'une relativement faible diminution du coefficient de transmission dans l'air.

L'élaboration par le dispositif selon l'invention d'un signal lumineux caractéristique de l'indice de réfraction du fluide dans lequel il est immergé peut être mise à profit aussi bien pour détecter des changements d'état discontinus de ce fluide que pour déterminer différentes caractéristiques de ce fluide liées à son indice de réfraction (ou des variations continues de ces caractéristiques).

Dans la première des applications qui vient d'être citée, le dispositif selon l'invention pourra de manière particulièrement avantageuse être utilisé pour détecter la présence ou l'absence d'un fluide à un endroit déterminé, et plus particulièrement la hauteur ou le niveau d'un fluide dans un récipient donné, les différentes courbures constitutives de la section incurvée du conducteur de lumière étant alors disposées au niveau que l'on désire détecter. Dans cette application comme indicateur de niveau, le dispositif peut être simplifié à l'extrême, étant donné qu'il doit détecter seulement deux états très différents : on peut ainsi supprimer complètement le système de détection de la lumière transmise et le remplacer par une simple observation visuelle, la courbure des portions incurvées étant par ailleurs choisie avantageusement de façon à occasionner des pertes de lumière minimes en l'absence de liquide, de sorte que l'extrémité de détection du conducteur de lumière apparaîtra sombre si le liquide est au niveau désiré ou au contraire deviendra claire s'il vient à manquer du liquide. On peut aussi envisager de supprimer la source de lumière montée à demeure à l'extrémité d'injection du conducteur de lumière, et la remplacer par une simple source de lumière annexe (par exemple lampe portative telle que lampe de poche) avec laquelle on éclairera cette extrémité d'injection de lumière au moment où l'on désire effectuer la vérification de niveau. En ce qui concerne cette détection de niveau, on pourra par ailleurs envisager de réaliser aussi bien une détection discrète (mesure d'un niveau unique) qu'une détection quasi continue (mesure de différents niveaux possibles à l'intérieur d'un même récipient, par exemple niveaux maximum et minimum), en installant un dispositif à chacun des niveaux à détecter.

La figure 7 illustre à titre d'exemple une installation pour mesurer trois niveaux distincts à l'intérieur d'un récipient 40 (niveaux maximum, moyen et minimum). Cette installation comprend trois fibres optiques selon l'invention 41, 42 et 43 montées à l'intérieur d'un conduit tubulaire 44 immergé dans le récipient 40, ces trois fibres optiques présentant des sections incurvées 41a, 42a et 43a en forme de W disposées à hauteur de chacun des niveaux à mesurer. Dans cette installation, l'injection de lumière dans les sections d'entrée des fibres est réalisée à l'aide d'une source de lumière unique 45, cependant que l'indication de niveau est obtenue par simple observation visuelle de l'extrémité libre des sections de sortie de ces fibres. Le récipient étant à titre d'exemple au trois-quarts plein au dessin, seule l'extrémité de sortie de la fibre 41 apparaît claire au dessin, les extrémités des deux autres fibres 42 et 43 restant sombres.

Les applications du dispositif selon l'invention comme indicateur de niveau sont multiples. On peut tout d'abord envisager de l'utiliser dans le domaine de l'instrumentation automobile (ou même aéronautique), pour détecter des niveaux tels que les niveaux du réservoir d'essence, de l'huile du moteur ou de la transmission, du liquide de freinage, de l'électrolyte de la batterie, du liquide pour laver le pare-brise, etc., les différentes extrémités de contrôle des fibres optiques utilisées pour détecter tous ces niveaux étant par exemple montées sur le tableau de bord du véhicule. On peut également envisager d'utiliser un tel indicateur de niveau dans bien d'autres domaines, tels que stockage de gaz liquéfiés (où les mesures de niveau sont généralement difficiles à effectuer compte tenu des risques de feu, des températures réduites et de l'environnement corrosif), réservoir de stockage de produits chimiques, etc.

Le dispositif selon l'invention peut également être utilisé comme réfractomètre, en vue de mesurer, soit directement l'indice de réfraction d'un fluide, soit d'autres caractéristiques de ce fluide liées à son indice de réfraction, telles que concentration d'une solution, proportion d'un des constituants d'un fluide composite, température d'un fluide liquéfié, etc... Dans une telle application comme réfractomètre, le système de détection de la lumière transmise peut être constitué par un système électrique comprenant par exemple un phototransistor relié à un dispositif de mesure, (susceptible d'être élaboré de façon à donner directement la valeur de la caractéristique à mesurer) ou au contraire par un simple système visuel basé sur l'observation d'une atténuation de luminosité ou d'un changement de couleur (éventuellement susceptible d'être comparée avec ceux d'une fibre de contrôle).

Les domaines d'application d'un tel réfractomètre sont multiples : industrie chimique, domaine médical, instrumentation en général, instrumentation automobile ou aéronautique, etc... Dans le domaine de l'instrumentation automobile, on peut ainsi envisager d'utiliser un tel réfractomètre pour des applications telles que détermination de l'état de charge d'une batterie acide-plomb ou détermination de la résistance à la congélation de l'antigel. En ce qui concerne cette première application à la batterie, on sait qu'on peut déterminer l'état de charge d'une batterie acide-plomb classique en mesurant les variations de l'indice de réfraction de l'électrolyte, cet indice tombant de 1,378 en pleine charge à 1,348 lorsque la batterie est à plat : le diagramme de la figure 6 montre que ce changement d'indice correspondrait à une variation du coefficient de contraste d'environ 88 à 35 pour la fibre optique correspondant à la courbe D (respectivement une variation du coefficient de contraste d'environ 35 à 19 pour la fibre optique correspondant à la courbe C), ce qui peut être facilement mesuré de manière visuelle ou électroniquement. En ce qui concerne la seconde application à l'antigel, on sait par ailleurs que le propylène glycol tend de plus en plus à remplacer l'éthylène glycol, dont l'utilisation comme antigel est maintenant interdite dans de nombreux pays en raison de sa toxicité : la détermination du pourcentage d'éthylène glycol à l'aide d'un densitomètre ne peut malheureusement plus être appliquée pour le propylène glycol, étant donné que la densité de ce dernier est très voisine de celle de l'eau, de sorte que le dispositif selon l'invention constitue dans ce cas une solution de remplacement particulièrement avantageuse pour cette application.

Le dispositif selon la présente invention présente de nombreux avantages par rapport aux jauges de niveau ou réfractomètres connus : simplicité tant dans sa construction que son utilisation, faible coût, contraste élevé le rendant particulièrement attrayant pour son utilisation comme indicateur de niveau, excellente sensibilité aux changements d'indices de réfraction permettant une bonne utilisation comme réfractomètre.

**Revendications**

1. Dispositif pour élaborer un signal lumineux caractéristique de l'indice de réfraction d'un fluide, comportant un seul corps longiligne conducteur de la lumière se composant d'une section d'entrée et d'une section de sortie raccordées l'une à l'autre par une section intermédiaire incurvée, ladite section d'entrée étant destinée à recevoir de la lumière par son extrémité libre et au moins ladite section incurvée étant destinée à être immergée dans ledit fluide, la courbure de ladite section incurvée étant par ailleurs choisie suffisamment prononcée pour donner lieu à un passage de lumière non négligeable par réfraction dans ledit fluide, fonction de l'indice de réfraction du corps longiligne étant supérieur à celui du fluide, caractérisée par le fait que ladite section intermédiaire incurvée présente un profil comprenant au moins deux courbures successives suffisamment prononcées, alternativement concave et convexe.

2. Dispositif selon la revendication 1, caractérisé par le fait que ladite section intermédiaire incurvée présente un profil comprenant au moins trois courbures successives suffisament prononcées alternativement.

3. Dispositif selon la revendication 1, caractérisé par le fait que ladite section intermédiaire incurvée présente un profil comprenant une pluralité de courbures successives suffisamment prononcées.

4. Dispositif selon les revendications 1, 2 ou 3, caractérisé par le fait que lesdites courbures successives sont raccordées entre elles par l'intermédiaire de portions intermédiaires droites dont la longueur reste relativement faible par rapport à celle desdites courbures.

5. Dispositif selon les revendications 1, 2 ou 3, caractérisé par le fait que lesdites courbures successives sont tangentes à un point commun.

6. Dispositif selon les revendications 1, 2 ou 3, caractérisé par le fait que ledit corps longiligne présente une section droite circulaire, le rayon de courbure desdites courbures étant par ailleurs préférentiellement choisi de façon à être de trois à cinq fois supérieur au rayon de la section droite dudit corps longiligne.

7. Dispositif selon la revendication 1, caractérisé par le fait que ledit corps longiligne conducteur de la lumière est constitué par une tige faite en un matériau transparent.

8. Dispositif selon la revendication 1, caractérisé par le fait que ledit corps longiligne conducteur de la lumière est constitué par une fibre optique se composant d'un cœur fait en un premier matériau transparent entouré d'une gaine faite en un second matériau transparent d'indice de réfraction inférieur à celui dudit premier matériau transparent.

9. Dispositif selon la revendication 8, caractérisé par le fait que la section intermédiaire incurvée de ladite fibre optique est dénudée de sa gaine.

10. Dispositif selon la revendication 1, caractérisé par le fait qu'il comporte en outre une source lumineuse agencée en regard de l'extrémité libre de ladite section d'entrée, destinée à permettre l'injection d'un faisceau lumineux déterminé dans ladite section d'entrée.

11. Dispositif selon la revendication 10, caractérisé par le fait que ladite source lumineuse est agencée de façon à permettre l'injection d'un faisceau divergent dans ladite section d'entrée.

12. Dispositif selon les revendications 10 ou 11, caractérisé par le fait qu'il comporte de plus un transducteur photoélectrique agencé en regard de l'extrémité libre de ladite section de sortie, destinée à élaborer un signal électrique représentatif de la quantité de lumière émergeant de cette section de sortie.

13. Utilisation du dispositif selon la revendication 1, pour détecter la présence ou l'absence dudit fluide.

14. Utilisation du dispositif selon la revendication 1 pour déterminer l'indice de réfraction dudit fluide.

**Claims**

1. A device for processing a light signal which is characteristic of the index of refraction of a fluid, comprising a single elongate light-conducting body comprising an input portion and an output portion connected to one another by a curved intermediate portion, the said input portion being designed to receive light through its free end and at least the said curved portion being designed to be immersed in the fluid the curvature of the curved portion being selected so as to be sufficiently pronounced to enable a non-negligible passage of light by refraction in the fluid as a function of the index of refraction of this fluid, the index of refraction of the elongate body being greater than that of the fluid, characterised in that the curved intermediate portion has a profile having at least two sufficiently pronounced successive curves which are alternately concave and convex.

2. A device as claimed in claim 1, characterised in that the curved intermediate portion has a profile having at least three sufficiently pronounced curves which are alternately concave and convex.

3. A device as claimed in claim 1, characterised in that the curved intermediate portion has a profile having a plurality of sufficiently pronounced curves.

4. A device as claimed in claims 1, 2 or 3, characterised in that the successive curves are connected together by means of straight intermediate portions whose length is relatively small relative to the lengths of the curves.

5. A device as claimed in claims 1, 2 or 3, characterised in that the successive curves form tangents to a common point.

6. A device as claimed in claims 1, 2 or 3, characterised in that the elongate body has a circular cross section, the radius of curvature of the curves being preferably selected so as to be three to five times greater than the radius of the cross section of the elongate body.

7. A device as claimed 1, characterised in that the elongate light-conducting body is constituted by a rod made of a transparent material.

8. A device as claimed in claim 1, characterised in that the elongate ligh-conducting body is constituted by an optical fibre composed of a core of a first transparent material surrounded by a sheath of a second transparent material having an index of refraction which is lower than that of the first transparent material.

9. A device as claimed in claim 8, characterised in that the curved intermediate portion of the optical fibre has the sheath removed from it.

10. A device as claimed in claim 1, characterised in that it further comprises a light source arranged opposite the free end of the input portion and designed to enable the injection of a given light beam into the input portion.

11. A device as claimed in claim 10, characterised in that the light source is arranged in such a way as to enable the injection of a divergent beam into the input portion.

12. A device as claimed in claims 10 or 11, characterised in that it further comprises a photoelectric transducer arranged opposite the free end of the output portion and designed to process an electrical signal representative of the quantity of light being discharged from this output portion.

13. The use of the device as claimed in claim 1 to detect the presence or the absence of the fluid.

14. The use of the device as claimed in claim 1 to determine the index of refraction of the fluid.

### Ansprüche

1. Vorrichtung zum Verarbeiten eines für den Brechungskoeffizienten eines Fluids charakteristischen Lichtsignals, bestehend aus einem einzigen langgestreckten Lichtleiterkörper, der sich aus einem Eingangsabschnitt und einem Ausgangsabschnitt zusammensetzt, die durch einen gekrümmten Zwischenabschnitt miteinander verbunden sind, wobei der Eingangsabschnitt das Licht mit seinem freien Ende aufnehmen und mindestens der gekrümmte Abschnitt in das Fluid eingetaucht werden soll, und wobei die Krümmung des gekrümmten Abschnitts im übrigen ausreichend ausgeprägt gewählt wird, um einem nicht unbeachtlichen Lichtdurchlass durch Brechung in das Fluid als Funktion des Brechungskoeffizienten in diesem Fluid stattzugeben, wobei der Brechungsindex des langgestreckten Körpers über dem des Fluids liegt, dadurch gekennzeichnet, dass der gekrümmte Zwischenabschnitt ein Profil mit mindestens zwei aufeinanderfolgenden, ausreichend ausgeprägten Krümmungen aufweist, die abwechselnd konkav und konvex sind.

2. Vorrichtung nach Anspruch 1, dadurch gekennzeichnet, das der gekrümmte Zwischenabschnitt ein Profil mit mindestens drei aufeinanderfolgenden, ausreichend ausgeprägten Krümmungen aufweist, die abwechselnd konklav und konvex sind.

3. Vorrichtung nach Anspruch 1, dadurch gekennzeichnet, dass der gekrümmte Zwischenabschnitt ein Profil mit einer Vielzahl von aufeinanderfolgenden, ausreichend ausgeprägten Krümmungen aufweist.

4. Vorrichtung nach einem der Ansprüche 1, 2, oder 3, dadurch gekennzeichnet, dass die aufeinanderfolgenden Krümmungen mittels gerader Zwischenteile miteinander verbunden sind, deren Länge im Verhältnis zu derjenigen der Krümmungen relativ schwach bleibt.

5. Vorrichtung nach einem der Ansprüche 1, 2 oder 3, dadurch gekennzeichnet, dass die aufeinanderfolgenden Krümmungen sich an einem gemeinsamen Punkt berühren.

6. Vorrichtung nach einem der Ansprüche 1, 2 oder 3, dadurch gekennzeichnet, dass der langgestreckte Körper einen kreisförmigen Querschnitt aufweist, wobei der Radius der Krümmungen im übrigen vorzugsweise so gewählt ist, dass er drei- bis fünfmal über dem Radius des Querschnitts des langgestreckten Körpers liegt.

7. Vorrichtung nach Anspruch 1, dadurch gekennzeichnet, dass der langgestreckte Lichtleiterkörper aus einer Stange aus durchsichtigem Material besteht.

8. Vorrichtung nach Anspruch 1, dadurch gekennzeichnet, dass der langgestreckte Lichtleiterkörper aus einer optischen Faser besteht, die sich aus einem ersten durchsichtigen Material bestehenden Kern zusammensetzt, der von einer Hülle aus einem zweiten durchsichtigen Material mit einem unter dem des ersten durchsichtigen Materials liegenden Brechungskoeffizienten umgeben ist.

9. Vorrichtung nach Anspruch 8, dadurch gekennzeichnet, dass der gekrümmte Zwischenabschnitt der optischen Faser von seiner Hülle abgemantelt ist.

10. Vorrichtung nach Anspruch 1, dadurch gekennzeichnet, das sie weiterhin eine gegenüber dem freien Ende des Eingangsabschnitts angeordnete Lichtquelle aufweist, die die Eingabe eines in diesem Eingangsabschnitt begrenzten Lichtbündels ermöglichen soll.

11. Vorrichtung nach Anspruch 10, dadurch gekennzeichnet, dass die Lichtquelle so angeordnet ist, dass sie die Eingabe eines sich in dem Eingangsabschnitt zerstreuenden Bündels ermöglicht.

12. Vorrichtung nach Anspruch 10 oder 11, dadurch gekennzeichnet, dass sie ausserdem einen photoelektrischen, gegenüber dem freien Ende des Ausgangsabschnitts angeordneten Umwandler aufweist, durch den ein elektrisches Signal verarbeitet werden soll, das repräsentativ für die aus diesem Ausgangsabschnitt austretende Lichtmenge ist.

13. Verwendung der Vorrichtung nach Anspruch 1 zur Festellung des Vorhandenseins oder Fehlens des Fluids.

14. Verwendung der Vorrichtung nach Anspruch 1 zur Bestimmung des Brechungskoeffizienten des Fluids.

FIG. 1a

FIG. 1b

FIG. 2

FIG. 3

FIG. 4

FIG. 5

FIG. 6

FIG. 7